Europäisches Patentamt

**European Patent Office**

Office européen des brevets

(11) Publication number: **0 089 609 B1**

# EUROPEAN PATENT SPECIFICATION

(45) Date of publication of patent specification: **29.05.91**

(51) Int. Cl.⁵: **G11B 5/84**, G11B 5/66, H01F 41/20, H01F 10/16

(21) Application number: **83102560.6**

(22) Date of filing: **15.03.83**

(54) Magnetic recording medium and method of manufacturing a magnetic recording medium.

(30) Priority: **16.03.82 JP 42043/82**
**27.12.82 JP 231543/82**

(43) Date of publication of application:
**28.09.83 Bulletin 83/39**

(45) Publication of the grant of the patent:
**29.05.91 Bulletin 91/22**

(84) Designated Contracting States:
**DE FR GB**

(56) References cited:
**EP-A- 0 035 870**
**EP-A- 0 036 717**
**US-A- 3 342 633**

**IBM TECHNICAL DISCLOSURE BULLETIN, vol. 21, no. 10, March 1979, pages 4239-4240, New York, US; C.H. BAJOREK et al.: "Cobalt-chromium films for hard magnetic biasing of magnetoresistive sensors and for magnetic recording medium"**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Sugita, Ryuji**
**8-7, Ogura-cho**
**Hirakata City 573(JP)**
Inventor: **Kanai, Kenji**
**734-32, Uzumasa**
**Neyagawa City 572(JP)**
Inventor: **Sasaki, Seishi**
**6-13-702, Koushienguchi 4-chome**
**Nishinomiya City 663(JP)**
Inventor: **Takahashi, Ken**
**41-3-106, Yamada-higashi 4-chome**
**Suita City 565(JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**W-8000 München 40(DE)**

## Description

The present invention relates to a method of manufacturing a magnetic recording medium, as stated in the characterizing portion of claim 1.

Hitherto for a magnetic recording medium, a coating type medium wherein magnetic powder coatings are applied on a non-magnetic substrate sheet or film has been widely used. Magnetic recording and playing apparatus have recently become miniaturized and thus are highly integrated as a general trend. The above-mentioned coating type recording medium has technical limits in fulfilling the needs for such a high density recording. In order to overcome such limits, recording media of ferro-magnetic metal thin film become paid attention to. The present invention relates to an improvement in such ferromagnetic thin film recording media.

As thin film material a material having Co as host material is most superior since it has large crystal anisotropy energy based on the hexagonal close packed structure. Especially a Co-Cr film containing 10 - 30 weight percent Cr can be used as a superior vertical magnetization film (the film is hereinafter referred to as Co-Cr vertical magnetization film). A Co-Cr film containing 10 - 30 weight percent Cr is superior also in corrosion-resistivity. That is, a magnetic recording medium having a Co-Cr film containing 10 - 30 weight percent Cr has an actual utility, and it is also superior in short wavelength recording characteristic, hence it can be said to be an ideal thin film medium.

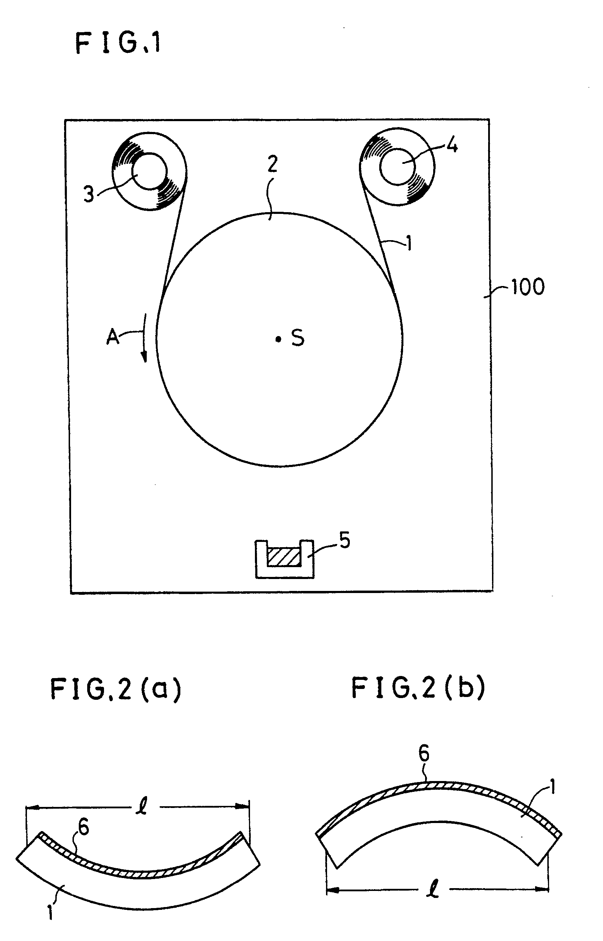

As manufacturing methods for applying the ferromagnetic metal thin-film coating on a recording medium, there are the plating method, sputtering method, vacuum-deposition method, or the like and the vacuum-deposition method is most superior when mass production is considered. In order to form a thin film type recording medium by means of vapour-deposition with a good and stable manufacturing productivity, as e.g. is disclosed in U.S. Patent No. 3 342 633, usually the vapour-deposition is made on a substrate 1 consisting of a high polymer material being driven along a cylindrical can or cylindrical body 2 from a vapourizing source 5 in an evacuated chamber 100. The cylindrical can 2 is driven to rotate around a shaft S by known means, and the high polymer substrate 1 is fed out from one roll 3 and wound up by another roll 4, as shown in FIG. 1.

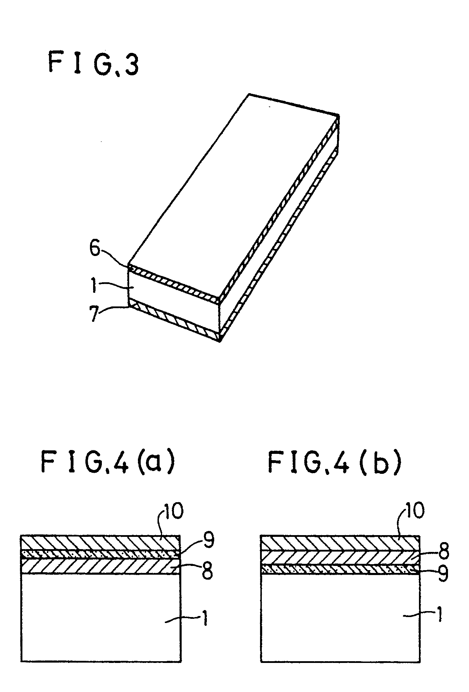

However when the thin film is formed in the above-mentioned way, in general the recording medium is likely to make curling as shown in FIG. 2(a) and in FIG. 2(b). That is, the recording medium curls concavely with respect to the ferromagnetic metal thin film 6 or convexly, depending on the natures and conditions of material and manufacturing processes. Accordingly the recording medium is likely to produce insufficient touching of the magnetic head, and hence poor characteristics in running or winding up. The state of curling shown in FIG. 2(a) is called normal curl and the state of curling shown in FIG. 2(b) is called inverse curl. Provided that the width of the recording medium when it is flatly extended is $\ell_0$, and becomes $\ell$ as shown in FIG. 2, when the recording medium is curled, then a curling ratio R defined by

$$(\ell_0 - \ell)/\ell_0 = R$$

should be 4 % or lower, in order that the medium is usable as a magnetic recording medium. In order to fulfil the above-mentioned condition, a measure is applied to form an anti-curl coating 7 as shown in FIG. 3 on the face opposite to the ferromagnetic thin metal coating 6, for instance by using a non-magnetic coating, or alternatively,when the curling is of normal curling, a heat treatment may be carried out after forming the thin ferromagnetic film so as to shrink the substrate; but either method requires an additional process leading to higher costs.

IBM TDB, Vol. 21, No. 10, March 1979, pages 4239 to 4240, related to the problem of obtaining Co-Cr films having high magnetic moment and high coercivity discloses cobalt-chromium (Co-Cr) films for magnetic recording media, having a chromium content of 18 weight %. Cobalt-chromium as host materials are used for improving magnetization properties. The Co-Cr films for the magnetic recording media are produced by vapour-deposition. Concerning the temperatures used for manufacturing such a recording medium by depositing a magnetic medium comprising Co-Cr, substrate temperatures from room temperature to 325 °C are proposed. The problem of curling is not mentioned at all. Furthermore, no indication related to the linear expansion coefficient of the substrate material and no further details related to the vapour-deposition of the Co-Cr films are given.

EP-A-0 036 717, relates to a magnetic recording medium comprising a Co-Cr film, which is manufactured by sputtering or by vapour-deposition. The chromium content of the film is about 30 or less weight %. Temperature values are disclosed only in relation to saturation magnetization. No further details related to manufacture of the film and no particulars about the substrate, such as e.g. its linear expansion coefficient, are given. The curling problem is not mentioned at all, either.

The object underlying the invention is to prevent curling which improves the recording characteristics of the magnetic recording medium.

This object is solved by a manufacturing method having the features of claim 1. Further realizations of the method according to the invention are indicated in the subclaims.

The invention resulted in the finding that the expansion coefficient of the substrate material has an influence on the curling of the magnetic recording medium, wherein the expansion coefficient should be selected from a certain range for forming the magnetic recording medium. Furthermore, it has been found that the temperature range of the substrate is very important and together with the feature of the expansion coefficient and the preselected Cr content the teaching of the invention results in the unexpected effect that curling caused by coating with Co and Cr as host material can be prevented.

More in detail, during manufacturing the Cr-Co film a polymer film as a substrate is running around a cylindrical can. At the same time a magnetic film containing Cr-Co as host materials is formed on the polymer film by vapour-deposition. According to the invention the surface temperature of the cylindrical can should be in the range of 150 to 300 $^\circ$C. The linear expansion coefficient of the substrate should be in the range of 1.0 and 2.9 x $10^{-5}/^\circ$C. It is assumed that forming of the Co-Cr filled with certain composition in the thermally expanded substrate is advantageous, the substrate and the Co-Cr film having substantially similar shrinkage rates after separation of the substrate from the can. These features of the method according to the invention assure prevention of substrate curling and allow manufacturing a flat magnetic recording medium assuring good running, winding and head touching characteristics and further having superior recording characteristics for short wavelength recording.

In the following the invention is further explained in relation with preferred embodiments of the invention and the drawings, wherein

FIG. 1 is a schematic front view of the vacuum deposition apparatus for use in manufacturing the magnetic recording medium;

FIG. 2(a) and FIG. 2(b) are sectional views of the recording medium making normal curling and inverse curling, respectively;

FIG. 3 is a perspective view of the recording medium with anti-curl coating on the side opposite to the ferromagnetic coating;

FIG. 4(a) is a sectional view of a recording medium made in accordance with the present invention;

FIG. 4(b) is a sectional view of another recording medium made in accordance with the present invention;

FIG. 5 is a schematic front view of a vapour deposition apparatus for carrying out a manufacturing method in accordance with the present invention.

The method according to the invention results in the curling ratio ($l_0$ - $l$)/$l_0$ being 4% or below by selection of optimum conditions for the vapour deposition with respect to the coefficient of linear expansion $\alpha$ of the substrate and to the temperature of the outer surface of the cylindrical can or the cylindrical guide body.

Table 1 shows values of the curling ratio obtained by many experiments, when a vapour deposition was made in the apparatus shown in FIG. 1 thereby forming a ferromagnetic metal thin film of Co-Cr containing 20 weight percent Cr, on substrates having three different linear expansion coefficients $\alpha$ and using three can temperatures. The substrate was 15 $\mu$m thick and the Co-Cr film was 2000Å (0,2$\mu$) thick.

## Table 1

| α<br>T | $(\times 10^{-5}/°C)$<br>0.5 — 0.9 | 1.0 — 2.9 | 3.0 — 3.5 |
|---|---|---|---|
| (°C)<br>0 —140 | normal curl,<br>higher than 4% | normal curl,<br>higher than 4% | inverse curl,<br>higher than 4% |
| 150 — 300 | normal curl,<br>higher than 4% | curl is<br>4% or lower | inverse curl,<br>higher than 4% |
| 310 — 350 | normal curl,<br>higher than 4% | inverse curl,<br>higher than 4% | inverse curl,<br>higher than 4% |

From the values given in Table 1 it is observed that when the linear expansion coefficient $\alpha$ is in the range of $1.0 \times 10^{-5}$-$2.9 \times 10^{-5}/°$ C and the outer surface temperature of the can is 150-300°C, the curling ratio ($\ell_0$ - $\ell/\ell_0$ of the ferromagnetic recording medium becomes 4% or lower. Incidentally it is experimentally confirmed that similar results are obtained even when the constituent of chromium in the Co-Cr thin film is changed in the range of 10-30 weight percent, the thickness of the substrate is changed to 9 $\mu$m, 12 $\mu$m, 20 $\mu$m or 26 $\mu$m, and the thickness of the ferromagnetic thin film is changed in the range of 500-5000Å(0,05-0,5$\mu$).

Furthermore, even when a thin film of Ti or permalloy is formed between the CO-Cr thin film and the high polymer substrate, the same results as above were obtained.

From the above results, the curling ratio ($\ell_0$ - $\ell)/\ell_0$ becoming 4% or lower,it is supposed that by heating the outside surface of the can to the temperature range of 150-300°C, the substrate is subject to thermal expansion and the Co-Cr film is formed in the thermally expanded substrate, and the amount of shrinkage of the substrate and of the Co-Cr film when these depart from the can surface lowering their temperature is substantially the same.

In case that a Co-Cr vertical magnetization film is formed on the substrate of high polymer material by means of the vapour deposition method, it is well known that the characteristic of the Co-Cr vertical magnetization film is improved by firstly vapour depositing a Ti film on the substrate and thereon vapour depositing the Co-Cr film. Furthermore, it is known that by providing a permalloy film between the substrate and the Co-Cr vertical magnetization film, the recording efficiency and the playback output are improved in comparison with the case without the permalloy film. The former type recording media having a permalloy intermediate film are called double layered media, and the media without such a permalloy film are called single layered media. As shown in FIG. 4(a) or in FIG. 4(b) by providing a Ti film in double layered media, the recording-playback characteristic can be improved. FIG. 4(a) shows a construction that on a substrate 1 of a high polymer material, a permalloy film 8 is formed, thereon Ti film 9 is formed and further thereon a Co-Cr vertical magnetization film 10 is formed. FIG. 4(b) shows another example construction that on a substrate 1 of high polymer material, a Ti film 9 is formed and further thereon a permalloy film 8 is formed, and further thereon a Co-Cr vertical magnetization film 10 is formed.

When a single layered medium or a modified double layered medium as shown in FIG. 4(a) and FIG. 4-(b) are manufactured by the vapour deposition method, it is experimentally confirmed that there is the necessity that in the first state, where a first layer of Ti film or permalloy film is vapour deposited on the high polymer substrate, the curling ratio ($\ell_0$ - $\ell)/\ell_0$ should be 6% or lower. If the curling ratio ($\ell_0$ - $\ell)/\ell_0$ exceeds 6% in the state when the first film has been formed on the substrate, then, when an overriding Co-Cr vertical magnetization is formed thereon by vapour deposition, the curling becomes more, or if a thermal treatment would be applied thereon for decreasing or removing the curl, then the vertical magnetization film makes cracks thereby making the recording media unusable. On the other hand, when the curling ratio ($\ell_0$ - $\ell)/\ell_0$ is controlled to be 6% or below, a medium having the Co-Cr vertical magnetization film formed thereon has a very small curl, and substantially no cracks are made in the vertical magnetization film.

Table 2 shows experimental results of curling ratio when the Ti film is firstly formed on the high polymer substrate,for substrates having various linear expansion coefficients $\alpha$ and for various temperatures T of the can of the vapour deposition apparatus. In the experiments the substrate thickness was 15$\mu$m and the Ti film thickness was 500Å.

**Table 2**

| $\alpha$ (×10$^{-5}$/°C) T | 0.5 —— 0.9 | 1.0 —— 2.9 | 3.0 —— 3.5 |
|---|---|---|---|
| (°C) -20 —— 0 | normal curl, higher than 6% | normal curl, higher than 6% | inverse curl, higher than 6% |
| 10 —— 120 | normal curl, higher than 6% | curl is 6% or lower | inverse curl, higher than 6% |
| 130 —— 200 | normal curl, higher than 6% | inverse curl, higher than 6% | inverse curl, higher than 6% |

As shown in Table 2 when the linear expansion coefficient $\alpha$ of high polymer material of the substrate is in the range of 1.0x10$^{-5}$-2.9x10$^{-5}$/°C, and the surface temperature of the can is in the range of 10-120°C, a recording medium having a curling ratio of 6% or below is obtainable. Furthermore, even when the substrate thickness is changed in the range of 9-26$\mu$m and the Ti film thickness is changed in the range of 300-1500Å (0,03-0,15$\mu$), the same results as given in Table 2 were obtained.

Table 3 shows experimental results of curling ratio $(l_0 - l)/l_0$ when a permalloy film is first formed on the substrate of high polymer material in the apparatus of FIG. 1. Therein the substrate thickness was 15$\mu$m and permalloy film thickness was 1000Å(0,1$\mu$).

**Table 3**

| $\alpha$ (×10$^{-5}$/°C) T | 0.5 —— 0.9 | 1.0 —— 2.9 | 3.0 —— 3.5 |
|---|---|---|---|
| (°C) 0 —— 110 | normal curl, higher than 6% | normal curl, higher than 6% | inverse curl, higher than 6% |
| 120 —— 260 | normal curl, higher than 6% | curl is 6% or lower | inverse curl, higher than 6% |
| 270 —— 350 | normal curl, higher than 6% | inverse curl, higher than 6% | inverse curl, higher than 6% |

Table 3 shows that when $\alpha$ is in the range of 1.0x10$^{-5}$ - 2.9x10$^{-5}$/°C and the surface temperature of the can is in the range of 120-260°C, a film curling ration $(l_0 - l)/l_0$ of 6% or below is obtainable. Even when the substrate thickness is changed in the range of 9-26$\mu$m and the permalloy film thickness is changed in the range of 500-3000 Å (0,05-0,3$\mu$) the same results as in Table 3 were obtainable.

By forming the Ti film and the permalloy film under the condition that the curling ratio is 6% or below, even when the Ti film and the permalloy film are superposedly formed, the curling ratio $(l_0 - l_0)/l_0$ can be maintained 6% or below. Furthermore, when a Co-Cr vertical magnetization film is formed on these double layered films keeping the surface temperature of the can in the range of 150 - 300°C, a single layered

5

medium or double layered medium without cracks and having a curling ratio of 4% or lower was obtainable.

### EXAMPLE 1

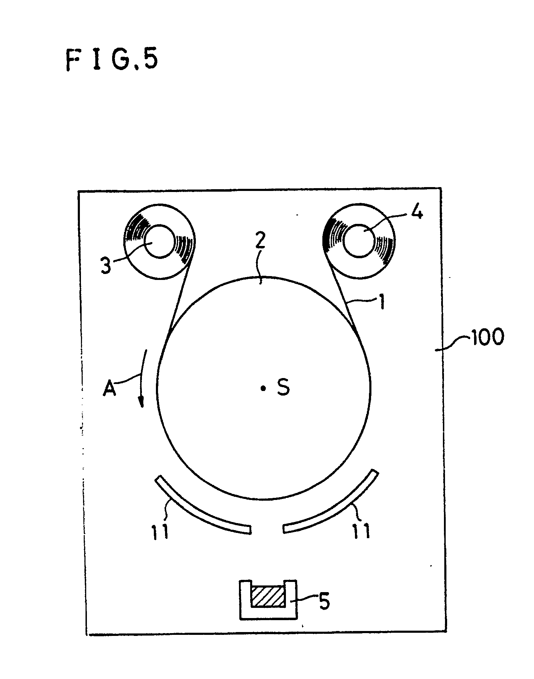

By utilizing a vapour deposition apparatus as shown in FIG. 5, a vertical magnetizing film of Co-Cr containing 20 weight percent Cr, having its axis of easy magnetization in a direction normal to the surface of the ferromagnetic film, is vapour deposited on a high polymer film substrate. The apparatus has masks 11 for vapour deposition and other parts are substantially the same as in the vapour deposition apparatus of FIG. 1. For the high polymer film substrate 1 a 12 $\mu$m thick film of heat resistive polyamide high polymer material is used, and the ferromagnetic film is formed by making the substrate 1 run at a running speed of 10m/min during the vapour-deposition, and a Co-Cr film of 2000Å (0,2$\mu$) thickness is formed keeping the surface temperature of the can 2 at 230° C. The linear expansion coefficient $\alpha$ of this polyamide film was 1.6x10$^{-5}$/° C. The resulting vertical magnetization recording medium has a slight normal curl, the curling ratio ($l_0$ - $l$)/$l_0$ of which is 2%.

### EXAMPLE 2

By utilizing the vapour deposition apparatus of FIG. 5, a 500Å (0,05$\mu$) thick Ti film is formed on a heat resistive high polymer material film substrate of 10$\mu$m film thickness. Then thereon, a Co-Cr vertical magnetization film of 1200Å thickness is formed. The vapour deposition was made under the condition that the running speed of the substrate film was 10m/min, the surface temperature of the can at the vapour deposition was 80° 6 and 250° 6 for Ti film deposition and Co-Cr vertical magnetization film deposition, respectively. The linear expansion coefficient $\alpha$ of the substrate film was 2.4x10$^{-5}$/° C. The resulting vertical magnetization recording medium has inverse curl and its curling ratio is 3%.

### EXAMPLE 3

By utilizing the vapour deposition apparatus of FIG. 5,on a substrate of 12$\mu$m thick heat resistant high polymer material, a 400Å (0,04$\mu$) Ti film was formed by vapour deposition, and thereon a 1000Å (0,1$\mu$) thick permalloy film and further thereon a 1000Å (0,1$\mu$)vertical magnetization film were sequentially formed. The vapour deposition conditions were that the running speed of the substrate was 10m/min, the surface temperatures of the can when vapour depositing the Ti film, the permalloy film and the Co-Cr vertical magnetization film were 40° C, 180° C and 200° C, respectively. The linear expansion coefficient of the substrate film was 2.1x10$^{-5}$/° C. The resulting double layered film medium has a slight normal curl and the curling ratio is 1%.

As has been elucidated in detail, according to the method of the present invention, by selecting the linear expansion coefficient of the substrate to be in the range of 1.0x10$^{-5}$-2.9x10$^{-5}$/° C and the temperature of the outside face of the can to be in the range of 150-300° C during the vapour deposition process, a recording medium having substantially no curl is obtainable.

## Claims

1.  Method of manufacturing a magnetic recording medium by vapour-depositing a magnetic film on a high polymer substrate, with or without intermediate layer(s) in between, wherein said vapour-deposition is made with said high polymer substrate running around a cylindrical can, and said magnetic film contains Co-Cr as host material, characterized in that the constituent of Cr in said magnetic film lies in the range of 10 - 30 weight %, that the linear expansion coefficient of said substrate is selected in the range of 1.0 x 10$^{-5}$ - 2.9 x 10$^{-5}$/° C, and that the temperature of the outer surface of said cylindrical can is selected in the range of 150 - 300° C.

2.  Method according to claim 1, for manufacturing a magnetic recording medium having intermediate layer(s) in between, characterized in that said intermediate layer is a Ti film being vapour-deposited making said high polymer substrate run around said cylindrical can which is heated to a temperature in the range of 10 - 120 °C, and said magnetic film is a vertical magnetization film.

3. Method according to claim 2, characterized in that the method further comprises the step that prior to the vapour-deposition of said Ti film, a permalloy film is vapour-deposited by making said high polymer substrate run around said cylindrical can which is heated to a temperature in the range of 120 - 260 °C.

4. Method according to claim 2, characterized in that the method further comprises the step that after the vapour deposition of said Ti film, a permalloy film is vapour-deposited by making said high polymer substrate run around said cylindrical can which is heated to a temperature in the range of 120 - 260 °C.


## Revendications

1. Procédé de fabrication d'un support d'enregistrement magnétique par dépôt en phase vapeur d'un film magnétique sur un substrat de haut polymère, avec ou sans couche(s) intermédiaire(s) entre celui-ci, dans lequel le dépôt en phase vapeur est effectué avec le substrat de haut polymère se déroulant autour d'un boîtier cylindrique, et le film magnétique contient Co-Cr comme matériaux hôtes, caractérisé en ce que la teneur de Cr dans le film magnétique se situe dans la plage de 10 à 30 % en poids, en ce que le coefficient de dilatation linéaire du substrat est sélectionné dans la plage de $1.0 \times 10^{-5}$ à $2,9 \times 10^{-5}/°C$, et en ce que la température de la surface externe du boîtier cylindrique est sélectionnée dans la plage de 150 à 300 °C.

2. Procédé selon la revendication 1, pour la fabrication d'un support d'enregistrement magnétique comportant une couche ou des couches intermédiaire(s) entre celui-ci, caractérisé en ce que la couche intermédiaire est un film de Ti étant déposée en phase vapeur amenant le substrat de haut polymère à se dérouler autour du boîtier cylindrique qui est chauffé à température dans la plage de 10 à 120 °C, et le film magnétique est un film de magnétisation verticale.

3. Procédé selon la revendication 2, caractérisé en ce que le procédé comprend, de plus, l'opération consistant en ce qu'au moment où le film de Ti est déposé en phase vapeur, un film de permalloy est déposé en phase vapeur en amenant le substrat de haut polymère à se dérouler autour du boîtier cylindrique qui est chauffé à une température dans la plage de 120 à 260 °C.

4. Procédé selon la revendication 2, caractérisé en ce que le procédé comprend, de plus, l'opération consistant en ce qu'après que le film de Ti ait été déposé en phase vapeur, un film de permalloy soit déposé en phase vapeur en amenant le substrat de haut polymère à se dérouler autour du boîtier cylindrique qui est chauffé à une température dans la plage de 120 à 260 °C.


## Ansprüche

1. Verfahren zur Herstellung eines magnetischen Aufzeichnungsmediums durch Dampfniederschlagung eines magnetischen Films auf ein hochpolymeres Substrat mit oder ohne Zwischenlage oder Zwischenlagen, wobei das Dampfniederschlagen ausgeführt wird, während das hochpolymere Substrat um einen zylindrischen Körper läuft, und wobei der magnetische Film Co-Cr als Wirtmaterial enthält, dadurch gekennzeichnet, daß der Anteil an Chrom in dem magnetischen Film im Bereich von 10 - 30 Gew.% liegt, daß der lineare Ausdehnungskoeffizient des Substrats in dem Bereich von $1,0 \times 10^{-5} - 2,9 \times 10^{-5}/°C$ gewählt ist und daß die Temperatur der Außenfläche des zylindrischen Körpers in dem Bereich von 150 - 300 °C gewählt ist.

2. Verfahren nach Anspruch 1 zur Herstellung eines magnetischen Aufzeichnungsmediums, welches eine Zwischenlage oder Zwischenlagen hat, dadurch gekennzeichnet, daß die Zwischenlage ein Ti-Film ist, der durch Dampfniederschlagung gebildet ist, während das hochpolymere Substrat um den zylindrischen Körper läuft, der auf eine Temperatur im Bereich von 10 - 120 °C erhitzt ist, und der magnetische Film ein vertikaler Magnetisierungsfilm ist.

3. Verfahren nach Anspruch 2, dadurch gekennzeichnet, daß das Verfahren weiterhin den Schritt umfaßt, daß vor der Dampfniederschlagung des Ti-Films ein Peramalloy-Film durch Dampfniederschlagung gebildet wird, während das hochpolymere Substrat rund um den zylindrischen Körper läuft, der auf eine Temperatur im Bereich von 120 - 260° C erhitzt ist.

4. Verfahren nach Anspruch 2, dadurch gekennzeichnet, daß das Verfahren weiterhin den Schritt umfaßt, daß nach der Dampfniederschlagung des Ti-Films ein Permalloy-Film durch Dampfniederschlagung gebildet wird, während das hochpolymere Substrat rund um den zylindrischen Körper läuft, der auf eine Temperatur im Bereich von 120 - 260° C erhitzt ist.

# F I G .1

# F I G .2 (a)

# F I G .2 (b)

# FIG.3

# FIG.4(a)    FIG.4(b)

F I G.5